# EUROPÄISCHE PATENTSCHRIFT

(11) **EP 0 873 367 B1**
(45) Veröffentlichungstag und Bekanntmachung des Hinweises auf die Patenterteilung: **27.06.2001**
(21) Anmeldenummer: 97900952.9
(22) Anmeldetag: 03.01.1997
(51) Int. Cl.: C08F 291/00, C08F 271/00, C08F 261/06, C09K 9/02, B32B 17/10

(54) **VERFAHREN ZUR HERSTELLUNG VON GELEN MIT THERMOTROPEN EIGENSCHAFTEN**
PROCESS OF PRODUCING GELS WITH THERMOTROPIC PROPERTIES
PROCEDE POUR LA PREPARATION DE GELS AYANT DES PROPRIETES THERMOTROPES

(30) Priorität: 13.01.1996 DE 19601085
(43) Veröffentlichungstag der Anmeldung: 28.10.1998
(73) Patentinhaber: BASF AKTIENGESELLSCHAFT, 67056 Ludwigshafen (DE)
(72) Erfinder: GERST, Matthias, D-67434 Neustadt (DE)
(86) Internationale Anmeldenummer: EP9700017
(87) Internationale Veröffentlichungsnummer: WO9725358

(56) Entgegenhaltungen:
- EP-A- 0 311 566
- EP-A- 0 677 536
- EP-A- 0 678 534
- DE-A- 2 658 643
- DE-A- 4 408 156
- DE-U- 9 316 261
- GB-A- 2 121 421

## Beschreibung

Die Erfindung betrifft ein Verfahren zur Herstellung von Gelen mit thermotropen Eigenschaften, dadurch gekennzeichnet, daß eine Mischung, enthaltend
a) 0,5 bis unter 5 Gew,-%, bezogen auf die Summe aus a), b) und c), Poly-N-Vinylcaprolactam, Copolymere von N-Vinylcaprolactam mit mindestens 20 Gew.-%, N-Vinylcaprolactam, Polyvinyletherhomo- oder copolymerisate, wobei die vorstehenden Polymere ein zahlenmittleres Molekulargewicht ovn 1000 bis 30000 g/mol haben,
b) radikalisch polymerisierbare Monomere und
c) Wasser oder ein organisches Lösungsmittel oder deren Gemische
mit UV-Licht oder Elektronenstrahlen bestrahlt wird.

Die Notwendigkeit zur rationellen Energieverwendung und auch die Nutzung der Sonnenenergie zum Heizen von Gebäuden setzt hoch-effektive und intelligente Systeme voraus, die die solenergetischen Systeme (Fenster, Kollektoren, Hausfassaden) optimal an die Witterungsbedingungen und Benutzeranforderungen anpassen. Ein qualitativ hochwertiges Fenster in einer Bürofassade sorgt für angenehme Temperaturen im Winter und führt damit zur Energieeinsparung. Spätestens im Frühjahr wird das gleiche Fenster zur Überhitzung und damit auftretenden Kühllasten führen und die Energieeinsparung des Winters zunichte machen. Daher ist es offensichtlich, daß in optimierten Systemen Steuerungsmechanismen zur Regelung des Strahlungs- oder Wärmeflusses notwendig sind. Diese Steuerung kann teils passiv geschehen, wie zum Beispiel die Abschattung durch Überdachungen oder Balkone oder aktiv mechanisch durch Rolle- oder Markisensysteme. Vieler dieser Systeme sind jedoch nicht effektiv genug, zu teuer oder in ihrer Langzeitbeständigkeit nicht ausreichend, was wiederum zu Mehrkosten führt.

Die Idee elektro- oder thermooptische Systeme zur Steuerung einzusetzen, taucht immer wieder auf, führte jedoch bisher aufgrund materialmäßiger oder systemtechnischer Probleme noch nicht zum entscheidenden Durchbruch.

Eine effektive und kostengünstige Methode zur Regelung des Strahlungs- und Wärmeflusses besteht in der Verwendung von thermotropen Schichten. Diese Schichten sind im ungeschalteten Zustand transparent und trüben sich erst oberhalb einer bestimmten Schalttemperatur ein. Die Eintrübung ist vollkommen reversibel, d.h. bei Abkühlung auf Temperaturen unterhalb der Schalttemperatur werden die thermotropen Schichten wieder vollkommen transparent.

In der EP-A-678 534 sind Gele für thermotrope Schichten beschrieben, welche aus Mischungen von Monomeren, thermotropen Polymeren und Lösemittel durch Bestrahlung mit energiereichem Licht erhältlich sind. Die Mindestmenge des thermotropen Polymeren ist 5 Gew.-%, bezogen auf die Mischung.

EP-A-0 677 536 betrifft die Herstellung für Gelen für thermotrope Schichten, wobei Mischungen, die Monomere und Wasser/Lösemittel enthalten, zu nicht fließfähigen Gelen polymerisiert werden.

DE-A-26 58 643 betrifft die Herstellung von Gelen für thermotrope Schichten, wobei Mischungen, die Polymere, Monomere und Wasser enthalten, peroxidisch polymerisiert werden. In den Beispielen werden Polymethylvinylether bzw. Polyvinylcaprolactam als Polymer und Acrylamid und Methylolacrylamid als Monomere eingesetzt.

Die erhaltenen Gele zeigen noch Nachteile hinsichtlich der Stabilität des aus den Monomeren durch Bestrahlung gebildeten Netzwerks und der Transparenz unterhalb der Schalttemperatur klar/trüb. Die Schalttemperatur sollte naturgemäß oberhalb Raumtemperatur, vorzugsweise zwischen 20 und 90°C liegen.

Aufgabe der vorliegenden Erfindung war daher ein Gel für thermotrope Schichten bzw. ein Verfahren zu dessen Herstellung, durch welches den voranstehend genannten Nachteilen abgeholfen wird.

Demgemäß wurde das Verfahren zur Herstellung des Gels gefunden.

Die Gele werden erhalten durch Bestrahlen einer Mischung, enthaltend die Komponenten a) b) und c) mit energiereichem Licht.

Als Komponente a) eignen sich insbesondere unvernetzte Polymere, welche thermotrope Eigenschaften in der Weise aufweisen, daß eine 10 gew.-%ige Lösung dieses Polymeren in dem gewählten Lösungsmittel c), d.h. in Wasser oder einem organischen Lösungsmittel bzw. deren Gemische in einem Schaltbereich umfassend weniger als 20°C eine Änderung der Transmission von Licht bei einer Wellenlänge von 600 nm und einer Schichtdicke von 10 mm aufweist, so daß oberhalb des Schaltbereichs weniger als 50 % des einfallenden Lichts und unterhalb des Schaltbereichs mindestens 70 % des einfallenden Lichts transmittiert werden. (Bei Messungen mit steigender oder fallender Temperatur zur Bestimmung der Transmission wird jeweils gewartet bis das Polymer bzw. das Gel die neu eingestellte Temperatur angenommen hat.)

Der Schaltbereich bzw. die Schalttemperatur liegt vorzugsweise im Bereich von 20 bis 90 besonders bevorzugt zwischen 20 und 50°C und ganz besonders bevorzugt im Falle von Verglasungssystemen im Bereich von 20 bis 40°C.

Der Schaltbereich sollte vorzugsweise weniger als 10°, besonders bevorzugt weniger als 5°C und ganz besonders bevorzugt nur 1°C oder weniger betragen.

Unterhalb des Schaltbereichs beträgt die Transmission vorzugsweise mindestens 90 %; oberhalb vorzugsweise weniger als 30 %.

Zur Bestimmung der Transmission wurden die Proben mit einem Lichtdurchlässigkeitsgerät vermessen. Das Gerät besteht im wesentlichen aus einer punktförmigen Lichtquelle und einer ebensolchen Photozelle, die den direkten Strahlengang der Lichtquelle erfaßt (direkt-direkt Messung). Der von der Photozelle angegebene Photostrom dient als Maß für die Intensität des hindurchtretenden Lichtes. In dem Strahlengang zwischen Lichtquelle und Photozelle befindet sich eine beheizbare Probenhalterung. Eine mit destilliertem Wasser gefüllte Küvette diente als Referenz.

Die thermotropen Eigenschaften des Polymeren werden vorzugsweise durch eine begrenzte Löslichkeit des Polymeren in dem gewählten Lösungsmittel oder -gemisch verursacht.

Die Temperatur oberhalb der die Polymere nur eine begrenzte Löslichkeit haben, bezeichnet man als im üblichen Sprachgebrauch als "lower critical solution temperature" (LCST) oder als Trübungstemperatur. Unterhalb der LCST sind die Polymeren in dem Lösungsmittel in der gewählten Menge weitgehend löslich, oberhalb der LCST bilden Lösungen aus diesem Polymeren ein mehrphasiges System, das aus mindestens einer polymerreichen Phase besteht und einer polymerarmen Phase. Dabei enthält das Lösungsmittel der polymerarmen Phase weniger als 50 % des ursprünglich im Lösungsmittel gelösten Polymeren. Die polymerreiche Phase enthält überwiegend Polymer, kann aber auch noch in dem Polymer eingeschlossenes Lösungsmittel oder an das Polymer angelagertes Lösungsmittel (z.B. Hydratwasser) enthalten.

Das Polymer a) besteht z.B. aus folgenden Monomeren:

| | |
|---|---|
| 60 - 100 | insbesondere 90 - 100 Gew.-% Monomere A |
| 0 - 20 | insbesondere 0 bis 10 Gew.-% vernetzend wirkende Monomere B |
| 0 - 20 % | sonstige Monomere C |

Wird Wasser als Lösungsmittel c) oder Hauptbestandteil des Lösungsmittels (mehr als 50 Gew.-% des Lösungsmittelgemischs) verwendet, so sind geeignete Monomere A (substituierte und unsubstituierte N-Vinylcaprolactame.

Als Monomere A kommen weiterhin Vinylether der Formel I

H₂C=CH-OR I

oder hydrophile Vinylether der Formel II

H₂C=CH-OR¹ II,

in Betracht worin
R für eine C₁-C₂₀-Alkylgruppe steht und R¹ für einen aliphatischen oder cycloaliphatischen Rest steht, der durch Hydroxylgruppen substituiert sein kann oder durch nicht benachbarte Gruppen -Y- unterbrochen sein kann, Y die Bedeutung eines Sauerstoffatoms, eines Schwefelatoms, einer Gruppe NR² oder N⁺N²R³X⁻ hat, worin R² und R³ unabhängig voneinander für ein Wasserstoffatom oder eine C₁-C₄-Alkylgruppe stehen sowie X⁻ für ein Gegenanion steht und das molare Verhältnis von Kohlenstoffatomen zur Summe aus Gruppen Y und Hydroxylgruppen in dem aliphatischen oder cycloaliphatischen Rest R¹ 1,01:1 bis 6,5:1 beträgt.

Als Vinylether der Formel I zu nennen sind insbesondere C₁-C₄-Alkylvinylether z.B. Methylvinylether, Ethylvinylether, Propylvinylether, Isopropylvinylether, n-Butylvinylether, iso-Butylvinylether und z.B. Dodecylvinylether.

Besonders bevorzugt ist Methylvinylether.

In Vinylethern der Formel II ist -Y- bevorzugt ein Sauerstoffatom.

Vinylether der Formel I oder II können z.B. für sich alleine oder in einem Gemisch miteinander, bevorzugt aus 40 bis 100 Gew.-% der Vinylether I und 0 bis 60 Gew.-% der Vinylether II als Monomere A eingesetzt werden.

Wenn Polymer a) auch vernetzbar sein soll, können auch Monomere B copolymerisiert werden, die eine kovalente Vernetzung der Polymerketten während oder nach der Polymerisation bewirken können.

Derartige Monomere B können zwei- oder mehrfach ethylenisch ungesättigte Verbindungen sein, wie z.B. Methylenbisacrylamid, Poly(ethylenoxid)-diacrylate und -dimethacrylate; Poly(propylenoxid)diacrylate, etc.

Geeignete Monomere B können auch ethylenisch ungesättigte Verbindungen sein, die durch Einwirkung von Strahlung wie z.B. UV-Strahlung, Additionsreaktionen mit sich selbst oder anderen vorhandenen Gruppen eingehen können. Derartige Monomere sind z.B. Zimtsäureglycidylmethacrylat, Furylacrylsäureglycidylmethacrylat; Zimtsäure(4-acryloxybutyl)ester; Zimtsäure(2-acryloxyethyl)ester; Zimtsäure(2-acryloxy-1-hydroxyethyl)ester, Furylacrylsäure(4-acryloxybutyl)ester; Furylacrylsäure(2-acryloxyethyl)ester; Furylacrylsäure(2-acryloxy-1-hydroxyethyl)ester etc.

Geeignet sind auch Coumarinderivate wie sie z.B. in Macromolecules, 23; S. 2693-2697 (1990) beschrieben sind oder p-Formylstyrolderivate wie sie in J. Polym. Sci. Polym. Chem. Ed. 20; S. 1419-1432 (1982) beschrieben sind.

Die Anwesenheit von Monomeren C ist im allgemeinen nicht erforderlich und daher nicht bevorzugt.

Besonders bevorzugt besteht Polymer a) im wesentlichen nur aus Monomeren A und enthält auch keine vernetzend wirkenden Monomeren B.

Das Polymer a) ist daher vorzugsweise vor und nach der Bestrahlung mit energiereichem Licht unvernetzt.

Polymere a) sind Poly-N-Vinylcaprolactam, Copolymere von N-Vinylcaprolactam mit mindestens 20 Gew.-%, N-Vinylcaprolactam und Polyvinyletherhomo- oder copolymerisate.

Die Polymeren a) haben ein zahlenmittleres Molekulargewicht Mn von 1000 bis 30000 g/mol, besonders bevorzugt von 5000 bis 28000 g/mol und ganz besonders bevorzugt von 10000 bis 25000 g/mol.

Das gewichtsmittlere Molekulargewicht M_{w} beträgt vorzugsweise 5000 bis 350000 und besonders bevorzugt 10000 bis 200000.

Die Bestimmung des Molekulargewichts Mₙ erfolgt ebenso wie die von M_{w} durch Gelpermeationschromatographie mit einem Polystyrolstandard und Dimethylformamid als Elutionsmittel.

Die Herstellung von Polymeren mit geringem Molekulargewicht ist allgemein bekannt. Das Molekulargewicht kann z.B. durch Mitverwendung von Reglern bei der radikalischen Polymerisation vermindert werden.

Neben den Polymeren a) enthält die Mischung radikalisch polymerisierbare Monomere b).

Die Monomeren b) bilden nach Bestrahlung mit energiereichem Licht ein dreidimensionales Netzwerk, d.h. ein Gel welches in dem gewählten Lösungsmittel oder Lösungsmittelgemisch nicht bzw. kaum löslich ist. Das aus Monomeren b) gebildete Netzwerk hat vorzugsweise keine thermotropen Eigenschaften oder weist allenfalls einen Schaltbereich auf, der mindestens 20°C oberhalb des Schaltbereichs des Polymeren a) liegt. Vorzugsweise liegt ein gegebenenfalls vorhandener Schaltbereich oberhalb des Siedepunkts des gewählten Lösungsmittels oder Lösungsmittelgemischs bei Normaldruck (1 bar).

Bei den Monomeren b) handelt es sich um radikalisch polymerisierbare Monomere. Geeignet ist zum Beispiel ein Monomerengemisch aus

| | |
|---|---|
| 70 bis 99,9 Gew.-% | vorzugsweise 85 bis 96 radikalisch polymerisierbaren, nicht vernetzbaren. Monomeren D und |
| 0,1 bis 30 Gew.-% | vorzugsweise 4 bis 15 Gew.-% vernetzbarer Monomere E |

Als Monomere D geeignet sind z.B. Vinylester von 1 bis 20 C-Atomen enthaltenden Carbonsäuren, welche teilweise oder vorzugsweise ganz zu Vinylalkoholen verseift sein können, (Meth)acrylamid, (Meth)acrylsäure, N-substituierte (meth)acrylamide, hydrophile Vinylether der Formel II. Des weiteren kommen Hydroxygruppen enthaltende (Meth)acrylate, wie C₁-C₂₀-Hydroxyalkyl (meth) acrylate, oder N-Methylolmethacrylamid in Betracht.

Als vernetzend wirkende Monomere E sind solche geeignet, welche mindestens 2 copolymerisierbare, ethylenisch ungesättigte Gruppen oder mindestens eine ethylenisch ungesättigte Gruppe und mindestens eine weitere reaktive, z.B. zu Kondensationsreaktionen befähigte Gruppe enthalten.

Zu nennen sind z.B. Monomere mit 2 oder mehr Acrylgruppen wie Polyethylenoxiddiacrylat, Methylenbisacrylamid.

Geeignete Lösungsmittel c) als Bestandteil der Mischung sind z.B. Glykole wie Ethylenglykol, Propylenglykol, Diethylenglykol, Dipropylenglykol, Glykolether wie Glykolmethylether, Diethylenglykolmono- und diether sowie Wasser.

Bevorzugt ist Wasser als Lösungsmittel oder ein Lösungsmittelgemisch, welches mindestens 60 Gew.-%, vorzugsweise 90 Gew.-% Wasser, bezogen auf das Lösungsmittelgemisch, enthält.

Die Kombination von Wasser mit einen der o.g. Lösungsmitteln hat den Vorteil, daß die Froststabilität der Gele erhöht wird. Die thermotropen Schichten sollen auch im Winter in den Anwendungen verbleiben. Dabei sollen sie die gleiche Funktion erfüllen wie im Sommer. Daher ist es notwendig, die Gele gegen Einfrieren zu stabilisieren. Dies ist notwendig, da das gefrierende Wasser zu dauerhaften Schäden an dem Gel oder an dem gesamten System (d.h. Gel und Trägerkonstruktion) verursachen kann. Eine Herabsetzung des Gefrierpunktes des Gels wird durch Zusatz von Glykolen, Glykolethern oder Alkoholen mit niedrigen Alkylketten erreicht. Den gleichen Effekt kann man auch erhalten, wenn das Lösungsmittel lösliche Salze enthält. Bei den Salzen ist jedoch darauf zu achten, daß sie mit dem Polymersystem verträglich sind und andererseits die Schalttemperatur nicht negativ beeinflußt wird. Die Menge an Mittel die zur Herabsetzung des Gefrierpunktes benötigt wird, hängt von der Umgebungstemperatur ab, in der die thermotrope Schicht angewandt wird.

Die eingangs definierten Mischungen können neben den Komponenten a), b) und c) noch weitere Bestandteile enthalten.

Um eine hohe Dauergebrauchsfähigkeit der thermotropen Schichten aus Gelen zu erhalten, können diese gegen Bakterienbefall stabilisiert werden. Daher ist es sinnvoll den Mischungen Biozide zuzusetzen. Dies kann entweder durch organische Verbindungen geschehen, wie z.B. durch Formaldehyd oder 1,2-Benzisothiazolon oder anorganischer Verbindungen wie Natriumfluorid. Die Menge an Biozid richtet sich nach der Applikation (Zugänglichkeit durch Mikroorganismen) und der Aktivität des Biozids. Grundlagen zur Biozidstabilisierung sind z.B. in Farbe und Lack; 82; S. 108 ff (1976); Farbe und Lacke; 99; S. 105 ff (1993) oder im "Lehrbuch der pharmazeutischen Chemie" (W. Schmack, K. Mayer, M. Haake; Verlag Vieweg und Sohn, Braunschweig 1983; z.B. S. 537 ff) beschrieben.

Des weiteren werden den Mischungen vorzugsweise Photoinitiatoren für die radikalische Polymerisation zugesetzt. Geeignete Mengen liegen zwischen 0,01 bis 5 Gew.-%, besonders bevorzugt 0,03 bis 3 Gew.-%, bezogen auf die radikalisch polymerisierbaren Monomeren b).

Einen allgemeinen Überblick über geeignete Photoinitiatoren kann man z.B. durch den Artikel von H.F. Gruber in Prog. Polym. Sci., Vol. 17, S. 953 ff. (1992) erhalten.

Für die Herstellung von Hydrogelen mit Wasser als Lösungsmittel eignen sich besonders Verbindungen wie wasserlösliche Benzophenonderivate (J. Appl. Polym. Sci; 32, S. 6209-26 (1986); Polym. Paint Colour J.; 179, S. 684-687 (1989); Polym. Paint. Resin; 175; S. 246-251 (1985)), sulphonierte aromatische Ketone (Eur. Polym. J., Vol. 27, S. 69-75 (1991)), wasserlösliche Thioxanthonderivate (J. Appl. Polym. Sci, 34; S. 477-488 (1987)) wie z.B. 4-Benzoyl-N,N-dimethyl-N-(2-oxo-2-propenyloxy)ethylbenzol-methanaminiumbromid, 4-Benzoyl, N;N,N,trimethylbenzolmethanaminiumchlorid, 4-(3-Dimethylamino-2-hydroxypropoxy)benzophenonmethylchlorid, 2-(3-Dimethylamino-2-hydroxypropoxy)-3,4-dimethyl- 9H-thioxanthen-9-one-methochlorid.

Vorzugsweise handelt es sich um einen Photoinitiator der allgemeinen Formel 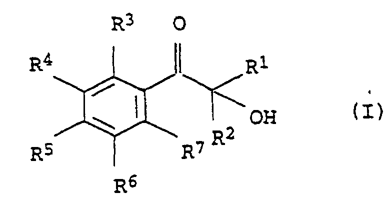 wobei es sich bei R¹ und R² unabhängig voneinander um eine C₁-C₁₀-Alkylgruppe handelt und R³ bis R⁷ unabhängig voneinander für ein Wasserstoffatom, eine C₁-C₁₀-Alkylgruppe oder eine C₅-C₁₀-Arylgruppe stehen können, mit der Maßgabe, daß mindestens einer der Reste R³ bis R⁷ für einen hydrophilen Rest steht, wobei es sich um eine Carbonsäure- bzw. Carboxylatgruppe, eine Sulfonsäure- bzw. Sulfonatgruppe, eine Hydroxylgruppe, eine Polyalkylenoxidgruppe oder einen organischen Rest mit bis zu 30 C-Atomen, der mindestens eine der vorstehenden hydrophilen Gruppen enthält, handelt.

Im Falle der Polyalkylenoxidgruppe als hydrophile Gruppe handelt es sich bevorzugt um eine Polyethylenoxid-, Polypropylenoxidgruppe oder gemischte Polyethylen-propylenoxidgruppe mit bevorzugt 2 bis 20 Alkylenoxideinheiten.

In der Formel I stehen R¹ und R² vorzugsweise für eine C₁-C₄-Alkylgruppe, besonders bevorzugt stehen sie für eine Methylgruppe. R³ bis R⁷ stehen bevorzugt für eine C₁-C₄-Alkylgruppe oder besonders bevorzugt für ein H-Atom. Mindestens einer, bevorzugt ein bis drei, besonders bevorzugt einer der Reste R³ bis R⁷ steht für einen der angegebenen hydrophilen Reste.

Bei dem hydrophilen Rest handelt es sich bevorzugt um einen aliphatischen Rest, z.B. einen Alkylrest oder Alkoxyrest, mit 1 bis 10 Kohlenstoffatomen, welcher gegebenenfalls Ethergruppen (-O-) enthalten kann und durch mindestens eine Hydroxylgruppe substituiert ist.

Besonders bevorzugt handelt es sich um einen Photoinitiator der Formel 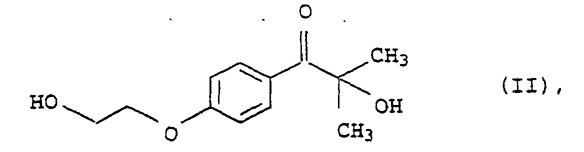 welcher als Darocure® 2959 von Ciba Geigy erhältlich ist.

Die eingangs definierte Mischung enthält vorzugsweise

| | |
|---|---|
| 0,5 bis unter 5 Gew.-%, | besonders bevorzugt 1 bis 4,9 Gew.-% und insbesondere 1 bis 4,5 Gew.-% des unvernetzten Polymeren a), |
| 1 bis 30 Gew.-%, | besonders bevorzugt 3 bis 27 Gew.-% radikalisch polymerisierbare Monomere b) und |
| 69,5 bis 98,5 Gew.-%, | besonders bevorzugt 70 bis 96 Gew.-% Wasser, organische Lösungsmittel oder deren Gemische. |

Die Mischung kann in einfacher Weise durch Zusammengeben der Komponenten und Homogenisieren, z.B. durch Rühren, hergestellt werden.

Die Herstellung des Gels kann dann vorzugsweise direkt in der für die thermotrope Schicht vorgesehenen Vorrichtung erfolgen.

Dazu wird die Mischung in diese Vorrichtung, z.B. ein Verglasungssystem, eingefüllt und mit energiereichem Licht bestrahlt.

Die Bestrahlung kann jedoch auch vorab erfolgen und das erhaltene Gel anschließend in die entsprechende Vorrichtung eingefüllt werden.

Bei der Bestrahlung polymerisieren und vernetzen die Monomeren b) so, daß sie ein dreidimensionales Netzwerk, bzw. ein Gel, bilden, welches das vorzugsweise unvernetzte Polymer a), das Lösungsmittel c) und gegebenenfalls weitere Zusatzstoffe enthält.

Vorzugsweise erfolgt die Bestrahlung mit UV-Licht oder Elektronenstrahlen.

Die Dauer der UV-Belichtung für vollständige Vergelung ist dann ausreichend, wenn bei einer dynamisch-mechanischen Analyse der Hydrogele bei 25°C der Speichermodul G'[Pa] größer als der Verlustmodul G' ' [Pa] bei einer Meßfrequenz von ω = 1 [rad/s] war. Die Daten wurden mit einem schergeschwindigkeitskontrollierten Rotationsviskosimeter, (RFS) Rheometrics, mit einer Kegel-Platte-Geometrie (Durchmesser = 25 mm, Kegel = 0.04 rad) bei 25°C mit einer Kreisfrequenz von 0.1 s⁻¹ < ω < 100 s⁻¹ gemessen.

Dynamisch-mechanische Messungen (DMA) unterwerfen die Hydrogelproben einer zeitlich sinusförmigen Deformation mit bestimmter Amplitute und Frequenz und messen die resultierende mechanische Spannung. Aus Deformation und Spannung läßt sich der komplexe dynamische Modul des Probenmaterials bestimmen. Er besteht aus zwei Komponenten, dem Speichermodul als Maß für die reversibel gespeicherte Deformationsenergie und dem Verlustmodul, der die irreversibel in Wärme umgewandelte Energie charakterisiert.

Die Methode ist allgemein bekannt und z.B. in A. Zosel, Farbe und Lack, 94 (1988) 809, beschrieben.

Die Bestrahlung erfolgt bevorzugt bei einer Temperatur von mindestens 5°C, besonders bevorzugt mindestens 10°C, ganz besonders bevorzugt mindestens 20°C unterhalb des Schaltbereichs bzw. unterhalb des Trübungspunkts als unterer Temperaturgrenze des Schaltbereichs.

Die Gele eignen sich zur Herstellung von thermotropen Schichten, welche die eingangs beim Polymer a) beschriebenen Bedingungen bezüglich Schaltbereich und Transparenzänderung erfüllen.

Gleichzeitig zeigen die Gele eine hohe Transparenz im homogenen Zustand, d.h. unterhalb des Schaltbereichs. Auch nach vielen Wiederholungen des Schaltvorgangs bleibt der Transparenzunterschied groß und der Schaltbereich eng. Vorteilhaft ist auch die geringe Schaltzeit.

Die Gele eignen sich daher besonders zur Herstellung von Verglasungssystemen mit thermotropen Eigenschaften und von Bauteilen für die Wärmeisolierung.

### Beispiel

Eine Mischung aus 2,67 g einer 30 gew.-%igen Lösung von Poly-N-vinylcaprolactam in Wasser (thermotropes Polymer, Mₙ = 10500, 2 Gew.-% bezogen auf alle Bestandteile des Gels), 32,49 g Wasser, 2,72 g wäßrige Acrylamidlösung (50 %ig), 2,10 g wäßrige Methylenbisacrylamidlösung (2 %ig), (Gewichtsverhältnis Acrylamid:Methylenbisacrylamid 97:3), 0,02 g Photoinitiator Darocure® 2959 (fest, entspricht 2 Gew.-%, bezogen auf alle Bestandteile des Gels), wurde entgast und zwischen zwei Floatglasscheiben (Dicke der Scheiben 4 mm, Abstand der Scheiben 1 mm) eingefüllt. Anschließend wurde die befüllte Verglasung 15 min bei 10°C unter einer UV-Lampe (λ^{max} = 367 nm) bestrahlt. Die Probe vernetzte zu einem Gel.

### Beispiele 2 bis 4

Beispiel 1 wurde wiederholt, wobei die Menge des thermotropen Polymeren geändert wurde.

Gleichzeitig wurde die Wassermenge entsprechend verringert.

Die Transparenz der erhaltenen Gele bei T = 22°C, also unterhalb der Schalttemperatur wurde visuell beurteilt.

Ergebnisse sind in der Tabelle aufgeführt.

| Beispiel | Konzentration des thermotropen Polymeren* | visuelle Beurteilung |
|---|---|---|
| 1 | 2 | transparent |
| 2 | 3 | transparent |
| 3 | 4 | transparent |
| 4** | 10 | trüb |

| | | |
|---|---|---|
| * bezogen auf alle Bestandteile des Gels (Gew.-%) | | |
| ** zum Vergleich | | |

## Patentansprüche

1. Verfahren zur Herstellung von Gelen mit thermotropen Eigenschaften, dadurch gekennzeichnet, daß eine Mischung, enthaltend
a) 0,5 bis unter 5 Gew,-%, bezogen auf die Summe aus a), b) und c), Poly-N-Vinylcaprolactam, Copolymere von N-Vinylcaprolactam mit mindestens 20 Gew.-%, N-Vinylcaprolactam, Polyvinyletherhomo- oder copolymerisate, wobei die vorstehenden Polymere ein zahlenmittleres Molekulargewicht ovn 1000 bis 30000 g/mol haben,
b) radikalisch polymerisierbare Monomere und
c) Wasser oder ein organisches Lösungsmittel oder deren Gemische
mit UV-Licht oder Elektronenstrahlen bestrahlt wird.

2. Verfahren gemäß Anspruch 1, dadurch gekennzeichnet, daß es sich um eine Mischung, enthaltend
a) 0,5 bis unter 5 Gew.-%, bezogen auf die Summe aus a), b) und c), Poly-N-Vinylcaprolactam, Copolymere von N-Vinylcaprolactam mit mindestens 20 Gew.-%, N-Vinylcaprolactam, Polyvinyletherhomo- oder copolymerisate,
b) 1 bis 30 Gew.-% radikalisch polymerisierbare Monomere und
c) 69,5 bis 98,5 Gew.-% Wasser oder ein organisches Lösungsmittel oder deren Gemische
handelt.

3. Verfahren gemäß einem der Ansprüche 1 bis 2, dadurch gekennzeichnet, daß es sich bei Komponente c) um Wasser handelt.

4. Verfahren gemäß einem der Ansprüche 1 bis 3, dadurch gekennzeichnet, daß das unvernetzte Polymer a) thermotrope Eigenschaften in der Weise aufweist, daß eine 10 gew.-%ige Lösung dieses Polymeren in Wasser oder einem organischen Lösungsmittel oder deren Gemische in einem Schaltbereich umfassend weniger als 20°C eine Änderung der Transmission von Licht bei einer Wellenlänge von 600 nm und einer Schichtdicke von 10 mm bewirkt, so daß bei Temperaturen oberhalb des Schaltbereichs weniger als 50 % des einfallenden Licht und unterhalb des Schaltbereichs mindestens 70 % des einfallenden Lichts transmittiert werden.

5. Verfahren gemäß einem der Ansprüche 1 bis 4, dadurch gekennzeichnet, daß die Monomeren bzw. das Monomerengemisch b) nach Bestrahlung mit energiereichem Licht ein dreidimensionales Netzwerk bildet, welches keine thermotrope Eigenschaft, wie in Anspruch 4 definiert, aufweist oder welches einen Schaltbereich mindestens 20°C oberhalb des Schaltbereichs der Polymeren a) hat.

6. Verfahren gemäß einem der Ansprüche 1 bis 5, dadurch gekennzeichnet, daß die Mischung zusätzlich einen Photoinitiator enthält.

## Claims

1. A process for the preparation of a gel having thermotropic properties, which comprises irradiating a mixture comprising
a) 0.5 to less than 5% by weight, based on the sum of a), b) and c), of poly-N-vinylcaprolactam, a copolymer of N-vinylcaprolactam with at least 20% by weight of N-vinylcaprolactam, or polyvinyl ether homo- or copolymers, where the above polymers a) have a number average molecular weight of from 1000 to 30,000 g/mol,
b) monomers which can be polymerized by means of free radicals, and
c) water or an organic solvent, or a mixture thereof,
with UV light or electron beams.

2. A process as claimed in claim 1, wherein the mixture comprises
a) from 0.5 to less than 5% by weight, based on the sum of a), b) and c), of poly-N-vinylcaprolactam, a copolymer of N-vinylcaprolactam with at least 20% by weight of N-vinylcaprolactam, or polyvinyl ether homo- or copolymers,
b) from 1 to 30% by weight of monomers which can be polymerized by means of free radicals, and
c) from 69.5 to 98.5% by weight of water or an organic solvent, or a mixture thereof.

3. A process as claimed in one of claims 1 and 2, wherein component c) is water.

4. A process as claimed in one of claims 1 to 3, wherein the uncrosslinked polymer a) has thermotropic properties such that a 10% strength by weight solution of this polymer in water or an organic solvent or a mixture thereof causes, in a switching range covering less than 20°C, a change in the transmission of light at a wavelength of 600 nm and a layer thickness of 10 mm so that less than 50% of the incident light is transmitted at temperatures above the switching range and at least 70% of the incident light is transmitted at temperatures below the switching range.

5. A process as claimed in one of claims 1 to 4, wherein the monomer or monomer mixture b), after irradiation with high-energy light, forms a three-dimensional network which does not have thermotropic properties as defined in claim 4 or which has a switching range at least 20°C above the switching range of the polymer a).

6. A process as claimed in one of claims 1 to 5, wherein the mixture additionally comprises a photoinitiator.

## Revendications

1. Procédé de préparation de gels ayant des propriétés thermotropes, caractérisé en ce qu'un mélange, contenant
a) 0,5 jusqu'à moins de 5% en poids, par rapport à la somme de a), b) et c), de poly-N-vinylcaprolactame, de copolymères de N-vinylcaprolactame ayant au moins 20% en poids de N-vinylcaprolactame, des homo- ou co-polymères polyvinyléther, les polymères ci-dessus ayant une masse moléculaire moyenne en nombre de 1 000 à 30 000 g/mole,
b) des monomères polymérisables par voie radicalaire et
c) de l'eau ou un solvant organique ou leurs mélanges,
est irradié avec de la lumière UV ou des faisceaux électroniques.

2. Procédé selon la revendication 1, caractérisé en ce que il s'agit d'un mélange contenant
a) 0,5 jusqu'à 5% en poids, par rapport à la somme de a), b) et c), de poly-N-vinylcaprolactame, de copolymères de N-vinylcaprolactame ayant au moins 20% en poids de N-vinylcaprolactame, des homo- ou co-polymères polyvinyléther,
b) 1 à 30% en poids de monomères polymérisables par voie radicalaire et
c) 69,5 à 98,5% en poids d'eau ou d'un solvant organique ou de leurs mélanges.

3. Procédé selon l'une quelconque des revendications 1 à 2, caractérisé en ce que, quant au composant c), il s'agit d'eau.

4. Procédé selon l'une quelconque des revendications 1 à 3, caractérisé en ce que le polymère a) non réticulé présente des propriétés thermotropes, de sorte qu'une solution à 10% en poids de ce polymère dans de l'eau ou un solvant organique ou leurs mélanges provoque dans une plage de transition faisant moins de 20°C, une modification de la transmission de lumière, à une longueur d'onde de 600 nm et à une épaisseur de couche de 10 mm, de sorte qu'à des températures supérieures à la plage de transition, moins de 50% de la lumière incidente est transmise et à des températures inférieures à la plage de transition, au moins 70% de la lumière incidente est transmise.

5. Procédé selon l'une quelconque des revendications 1 à 4, caractérisé en ce que les monomères ou le mélange de monomères b) après avoir été irradiés avec de la lumière riche en énergie, forme un réseau tridimensionnel qui ne présente aucune propriété thermotrope, telle que définie par la revendication 4, ou qui présente une plage de transition supérieure d'au moins 20°C à la plage de transition des polymères a).

6. Procédé selon l'une quelconque des revendications 1 à 5, caractérisé en ce que le mélange contient en plus un photoamorceur.
